(19) Europäisches Patentamt
European Patent Office
Office européen des brevets

(11) Numéro de publication: **0 233 124 B1**

(12) **FASCICULE DE BREVET EUROPEEN**

(45) Date de publication de fascicule du brevet: **06.11.91**

(51) Int. Cl.5: **G01N 21/78**, G21C 19/46

(21) Numéro de dépôt: **87400290.0**

(22) Date de dépôt: **09.02.87**

(54) **Procédé de dosage du neptunium par spectrophotométrie d'absorption.**

(30) Priorité: **13.02.86 FR 8601948**

(43) Date de publication de la demande: **19.08.87 Bulletin 87/34**

(45) Mention de la délivrance du brevet: **06.11.91 Bulletin 91/45**

(84) Etats contractants désignés: **DE GB**

(56) Documents cités:

**ANALYTICA CHIMICA ACTA, vol. 124, 1981, pages 443-448, Elsevier Scientific Publishing Co., Amsterdam, NL; P. CAUCHETIER: "Dosage spectrophotométrique du Neptunium"**

**RADIOCHIMICA ACTA, vol. 34, 1983, pages 195-202, R. Oldenbourg Verlag, Munich, DE; C. MADIC et al.: ""Cation-cation" complexes of pentavalent actinides; complexes formed by NpO + 2 or VO + 2 with VP2 + in aqueous perchlorate solutions"**

**CHEMICAL ABSTRACTS, vol. 94, 1981, page 438, résumé no. 72268g, Columbus, Ohio, US; V.S. KOLTUNOV et al.: "Interaction of actinides with vanadium ions. II. Kinetics of the reduction of neptunium(VI) by vanadium(IV) in a perchloric acid solution in the presence of glyoxal";**

**CHEMICAL ABSTRACTS, vol. 94, 1981, page 449, résumé no. 72407b, Columbus, Ohio, US; V.S. KOLTUNOV et al.: "Interaction of actinides with vanadium ions. I Equilibrium between neptunium(VI) and vanadium(V)";**

(73) Titulaire: **COMMISSARIAT A L'ENERGIE ATOMIQUE Etablissement de Caractère Scientifique Technique et Industriel**
**31/33, rue de la Fédération**
**F-75015 Paris(FR)**

(72) Inventeur: **Wagner, Jean-François**
**49, rue J.B. Le Couteux**
**F-93700 Drancy(FR)**

(74) Mandataire: **Mongrédien, André et al**
**c/o BREVATOME 25, rue de Ponthieu**
**F-75008 Paris(FR)**

EP 0 233 124 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

**Description**

La présente invention a pour objet un procédé de dosage du neptunium par spectrophotométrie d'absorption, utilisable notamment dans les installations de retraitement de combustibles nucléaires irradiés pour contrôler la teneur en neptunium des solutions aqueuses circulant dans ces installations.

La spectrophotométrie d'absorption constitue une méthode intéressante pour doser quantitativement le neptunium. En effet, celui-ci présente dans son degré d'oxydation (+V), c'est-à-dire sous la forme d'ions $NpO_2^+$, un pic d'absorption dont le maximum se situe à 981nm et qui correspond à un coefficient d'extinction molaire de l'ordre de $400 mol^{-1}cm^{-1}$ en milieu acide non complexant. Les caractéristiques de ce pic, c'est-à-dire sa largeur à mi-hauteur, la longueur d'onde du maximum et la sensibilité, permettent ainsi de doser quantitativement le neptunium dans de bonnes conditions.

Cependant, l'utilisation de cette méthode pose certains problèmes car dans les solutions acides telles que les solutions de retraitement des combustibles nucléaires irradiés, le neptunium est généralement présent sous les degrés d'oxydation (+IV), (+V) et (+VI) car ceux-ci sont relativement stables en milieu acide. De ce fait, l'utilisation directe de cette méthode ne permet pas de doser quantitativement tout le neptunium présent dans les solutions aqueuses. Aussi, pour mettre en oeuvre ce dosage, il est nécessaire de traiter préalablement la solution pour oxyder le neptunium (IV) en neptunium (V) et réduire le neptunium (VI) en neptunium (V). Un tel traitement peut être réalisé comme il est décrit par Ph. CAUCHETIER dans Anal. Chimica Acta, 1981-124, 443-448, en ajoutant du cérium (IV) à la solution pour oxyder le neptunium au degré d'oxydation (VI) et en ajoutant ensuite de l'hydroxylamine ou de l'hydrazine pour réduire le neptunium (VI) au degré d'oxydation (V). Dans ce cas, il est nécessaire aussi d'ajouter à la solution du nitrite de sodium pour détruire l'excès de réducteur utilisé précédemment et éviter que celui-ci ne réduise le neptunium (V) en neptunium (IV).

L'utilisation de tous ces réactifs et notamment du nitrite de sodium qui est un produit solide, pose des problèmes si l'on veut automatiser le dosage. Par ailleurs, l'emploi de nitrite de sodium a l'inconvénient de provoquer l'apparition de bulles au sein de la solution, ce qui est gênant dans le cas où l'on veut obtenir un dosage spectrophotométrique précis.

La présente invention a précisément pour objet un procédé de dosage du neptunium présent dans une solution aqueuse par spectrophotométrie d'absorption, dans lequel le prétraitement nécessaire pour stabiliser le neptunium au degré d'oxydation (V) est effectué sans avoir recours à de nombreux réactifs et se prête de ce fait à une automatisation.

Le procédé, selon l'invention, de dosage du neptunium présent dans une solution aqueuse, consiste à traiter ladite solution pour stabiliser le neptunium au degré d'oxydation (V) et à doser ensuite le neptunium (V) de la solution par spectrophotométrie d'absorption à une longueur d'onde correspondant à un pic d'absorption du neptunium (V), se caractérise en ce que l'on réalise le traitement de stabilisation du neptunium au degré d'oxydation (V) en ajoutant à ladite solution des quantités suffisantes d'un réactif sous deux degrés d'oxydation afin de réduire tout le neptunium (VI) présent dans la solution en neptunium (V) et oxyder tout le neptunium (IV) présent dans la solution en neptunium (V), ledit réactif étant choisi de façon telle qu'il ne présente pas d'absorption significative à la longueur d'onde utilisée pour le dosage du neptunium (V) par spectrophotométrie d'absorption.

Le procédé selon l'invention est particulièrement intéressant car on stabilise le neptunium au degré d'oxydation (V) en ayant recours à un seul réactif sous deux degrés d'oxydation pour effectuer simultanément et quantitativement la réduction du neptunium (VI) et l'oxydation du neptunium (IV) présents dans la solution.

Pour obtenir ce résultat, il est nécessaire d'utiliser un réactif tel que le potentiel du couple oxydoréducteur formé par le réactif dans ses deux degrés d'oxydation se situe entre le potentiel du couple oxydoréducteur Np(VI)/Np(V) et le potentiel du couple oxydoréducteur Np(V)/Np(IV).

Dans les milieux nitriques molaires qui sont généralement les milieux utilisés dans les usines de retraitement, les potentiels des couples oxydoréducteurs Np(VI)/Np(V) et Np(V)/Np(IV) ont respectivement des valeurs de 1,14V et 0,74V/ENH à 20°C.

Cependant, si l'on fixe la quantitativité des deux réactions intervenant simultanément au pour cent, les potentiels d'équilibre $E_1$ pour Np(VI)/Np(V) et $E_2$ pour Np(V)/Np(IV>) des deux systèmes ont pour valeur :

$$E_1 = E^{o'}_{Np(VI)/Np(V)} + \frac{2,3\ RT}{F} \ Log \frac{[Np(VI)]}{[Np(V)]}$$

soit $E_1 = 1{,}02V/ENH$ à 20° C

$$E_2 = E^{o'}_{Np(V)/Np(IV)} + \frac{2{,}3\ RT}{F} \log \frac{[Np(V)]}{[Np(IV)]}$$

soit $E_2 = 0{,}86V/ENH$ à 20° C

De ce fait, pour pouvoir être utilisé dans l'invention, le réactif doit être tel que son potentiel d'oxydoréduction soit situé entre 1 et 0,9V/ENH.

Par ailleurs, il est souhaitable que le couple oxydoréducteur utilisé dans l'invention soit un système réversible afin que les équilibres soient atteints rapidement.

Enfin, lorsqu'on veut utiliser le procédé de dosage de l'invention dans une installation de retraitement de combustibles irradiés, il est préférable que le réactif utilisé soit compatible avec les rejets autorisés dans l'installation.

A titre d'exemples de réactifs susceptibles de convenir, on peut citer le couple brome/bromure, le couple iodate/iode et le couple vanadate/vanadyle.

En effet, la réaction d'oxydoréduction du système brome/bromure :

$$Br_2 + 2e^- \rightleftharpoons 2Br^-$$

correspond à un potentiel de 1,09V.

La réaction d'oxydoréduction du système iodate/iode :

$$IO_3^- + 6H^+ + 5e^- \rightleftharpoons 1/2I_2 + 3H_2O$$

correspond à un potentiel de 1,19V à un pH de 0.

La réaction d'oxydoréduction du système vanadate/vanadyle :

$$VO_2^+ + 2H^+ + e^- \rightleftharpoons VO^{2+} + H_2O$$

correspond à un potentiel de 1V à un pH de 0.

De préférence, le réactif utilisé dans l'invention est constitué par du vanadium au degré d'oxydation (V) et au degré d'oxydation (IV), ce qui correspond au couple $VO_2^+/VO^{2+}$.

En effet, le couple vanadium (V)/vanadium (IV) possède le potentiel approprié et il peut être utilisé pour le dosage spectrophotométrique du neptunium (V) car il ne présente pas d'absorption dans la zone de longueur d'onde la plus intéressante pour ce dosage, soit à 981nm.

Par ailleurs, son emploi dans une installation de retraitement de combustibles irradiés ne pose pas de problèmes particuliers car il est compatible avec les rejets autorisés dans ces installations.

Le vanadium, sous ses deux degrés d'oxydation, peut être ajouté facilement à l'échantillon sous la forme d'une solution de sulfate de vanadyle $VOSO_4$ à laquelle on a ajouté du cérium (IV) pour oxyder partiellement le vanadium (IV) et obtenir ainsi une solution contenant du vanadium (V) et du vanadium (IV).

En utilisant ce mode de préparation du réactif, on peut estimer facilement les quantités de vanadium (V) et de vanadium (IV) présentes dans la solution car la quantité de vanadium (V) produite est égale à la quantité de cérium (IV) introduite.

Les solutions concentrées de sulfate de vanadyle, telles que celles contenant une mole par litre de sulfate de vanadyle en milieu nitrique molaire, sont stables plusieurs mois, ce qui ne pose pas de problème lorsqu'on veut utiliser ce réactif pour des contrôles automatiques de la teneur en neptunium de solutions.

Au bout de plusieurs mois un changement de coloration apparaît qui se traduit par une baisse de la

teneur en vanadium (IV), ce qui est dû à une oxydation partielle du sulfate de vanadyle.

Pour la mise en oeuvre du procédé de l'invention, le choix des quantités de vanadium (V) et de vanadium (IV) ajoutées à la solution est effectué en fonction de la nature de la solution de neptunium à doser.

En effet, il dépend tout d'abord de la quantité de neptunium présente en solution ; généralement, les teneurs en neptunium ne dépassent pas $1g.l^{-1}$, et dans ces conditions, les quantités de vanadium (V) et de vanadium (IV) ajoutées sont de préférence telles que la concentration totale en vanadium de la solution soit de $10^{-2}$ à $1,5.10^{-1}$ $mol.l^{-1}$.

En effet, il est préférable de limiter la quantité de vanadium ajoutée car la sensibilité du dosage diminue lorsque la teneur en vanadium augmente.

Ceci peut s'expliquer sans doute par le fait que le neptunium (V) est susceptible de former un complexe avec le vanadium (IV) comme il est décrit par C. MADIC, G.M.BEGUN, D.E. HOBART et R.L. HAHN dans Radiochimica Acta -1983, 34, 195.

La valeur de la constante de formation K de ce complexe a été estimée à 0,69±0,12 à force ionique 6,1 en milieu perchlorate. Aussi, si la teneur en vanadium (IV) augmente de façon importante, la teneur en complexe formé augmente également et le neptunium présent dans le complexe ne peut être dosé. Par ailleurs, bien que le vanadium à l'état d'oxydation (IV) présente son maximum d'absorption à 765nm, il se produit une absorption faible à 981nm mais celle-ci augmente avec la concentration en vanadium de l'échantillon. Aussi, pour cette raison, il est préférable également de limiter la teneur en vanadium de la solution.

La quantité de vanadium ajoutée à la solution dépend également des autres éléments présents dans cette solution. En effet, le système vanadium (V)/vanadium (IV) peut éventuellement réagir avec d'autres éléments qui pourraient être oxydés ou réduits par ce système.

Aussi, il faut tenir compte de la présence éventuelle de ces éléments pour s'assurer que les quantités de vanadium ajoutées sont suffisantes pour réduire tout le neptunium (VI) et oxyder tout le neptunium (IV) présent dans l'échantillon.

Le choix des quantités respectives de vanadium (V) et de vanadium (IV) ajoutées a également une importance sur le résultat. En effet, il est nécessaire d'avoir en solution la quantité de vanadium (IV) suffisante pour réduire le neptunium (VI) en neptunium (V) et d'avoir également une quantité suffisante de vanadium (V) pour oxyder le neptunium (IV) en neptunium (V). Les quantités ajoutées dépendent non seulement de la teneur en neptunium de la solution, mais également de la présence éventuelle d'autres éléments susceptibles d'être réduits ou oxydés par le vanadium (IV) ou par le vanadium (V). Généralement, dans le cas de solutions ne comportant pas de grandes quantités d'éléments susceptibles d'interférer avec ces réactions d'oxydation et de réduction du neptunium, les quantités de vanadium (V) et de vanadium (IV) ajoutées sont telles que le rapport de la quantité de vanadium (V) à la quantité de vanadium (IV) ait une valeur allant de 0,2 à 1 et, de préférence, de 0,4 à 0,6.

En effet, pour des valeurs du rapport vanadium (V)/vanadium (IV) inférieures à 0,2, le signal est faible. Ceci peut être imputé à un manque de quantitativité car la solution est trop réductrice pour oxyder la totalité du neptunium (IV) d'autant plus que le système oxydoréducteur Np(V)/Np(IV) est un système lent.

De même, pour des valeurs du rapport vanadium(V)/vanadium (IV) supérieures à 1, on obtient un signal faible dû également à un manque de quantitativité car la solution est alors trop oxydante pour réduire quantitativement le neptunium (VI).

Toutefois, comme précédemment, pour établir le rapport optimal des quantités de vanadium (V) et de vanadium (IV) utilisées, il faut tenir compte de la présence éventuelle d'éléments susceptibles de réagir avec une seule des espèces du couple oxydoréducteur vanadium (V)/vanadium (IV).

Ceci est en particulier le cas lorsque la solution aqueuse à doser contient du plutonium qui est par ailleurs gênant pour le dosage spectrophotométrique du neptunium (V) car le plutonium présente au degré d'oxydation (+VI) un pic d'absorption situé à 980nm avec un coefficient d'extinction molaire de $32mol^{-1}cm^{-1}$. Cependant, en milieu nitrique molaire, ce plutonium (VI) peut être réduit en plutonium (IV) par le vanadium (IV). En effet, la valeur des potentiels normaux des couples Pu(VI)/Pu(IV) et Pu(IV)/Pu(III) sont respectivement de 1,06V et 0,92VENH. Aussi, le système oxydoréducteur vanadium (V)/vanadium(IV) peut stabiliser le degré d'oxydation (IV) du plutonium et éliminer ainsi l'interférence du plutonium (VI) dans le dosage spectrophotométrique du neptunium (V).

Aussi, lorsque la solution aqueuse à doser contient du plutonium (VI), on ajoute à la solution une quantié de vanadium (IV) suffisante pour réduire, d'une part, tout le plutonium (VI) en plutonium (IV) et, d'autre part, tout le neptunium (VI) en neptunium (V).

Pour réaliser le dosage de l'invention, on peut utiliser des appareillages classiques, par exemple un spectrophotomètre du type Cary 17 avec une cuve de 1cm de parcours optique. Avec cet appareillage, on

peut doser le neptunium à des concentrations allant de $2mg.l^{-1}$ à $1g.l^{-1}$, l'incertitude au niveau de $350mg.l^{-1}$ étant de 1%. En premier lieu, on réalise l'étalonnage du spectrophotomètre en réalisant le dosage de solutions ayant des concentrations connues en neptunium pour déterminer les hauteurs correspondantes du pic d'absorption. Pour cet étalonnage, on ajoute aux solutions le réactif de l'invention en choisissant le rapport vanadium (V)/vanadium (VI) et la quantité totale de vanadium ajoutée qui seront utilisés ensuite pour le dosage des solutions ayant des concentrations inconnues en Np.

D'autres avantages et caractéristiques de l'invention, apparaîtront mieux à la lecture de la description qui suit d'exemples de mise en oeuvre du procédé de l'invention, donnés à titre illustratif, en référence au dessin annexé sur lequel :

- la figure 1 représente les spectres d'absorption du vanadium (IV) dans une solution aqueuse nitrique contenant $1mol.^{-1}$ de $HNO_3$ pour diférentes concentrations en vanadium de la solution,
- la figure 2 représente les spectres d'absorption d'une solution aqueuse contenant $1mol.l^{-1}$ d'acide nitrique et $1,42.10^{-3}$ $mol.l^{-1}$ de neptunium avant et après addition du couple vanadium (V)/vanadium (IV) avec un rapport vanadium(V)/vanadium (IV) de 0,5 et une concentration totale en vanadium de $2.10^{-2}$ $mol.l^{-1}$.
- la figure 3 représente les spectres d'absorption d'une solution aqueuse contenant $1mol.l^{-1}$ d'acide nitrique et $2.10^{-3}$ $mol.l^{-1}$ de Np(IV),
  1°) - sans autres additifs,
  2°) - après addition du couple vanadium (V)/vanadium (IV) avec un rapport vanadium (V)/vanadium (IV) de 0,35 et une concentration totale en vanadium de $8.10^{-2}$ $mol.l^{-1}$ , et
  3°) - après oxydation du neptunium (IV) en neptunium (V) par utilisation des réactifs de l'art antérieur,
- la figure 4 illustre l'influence du rapport vanadium (V)/vanadium (IV) sur la sensibilité du dosage, et

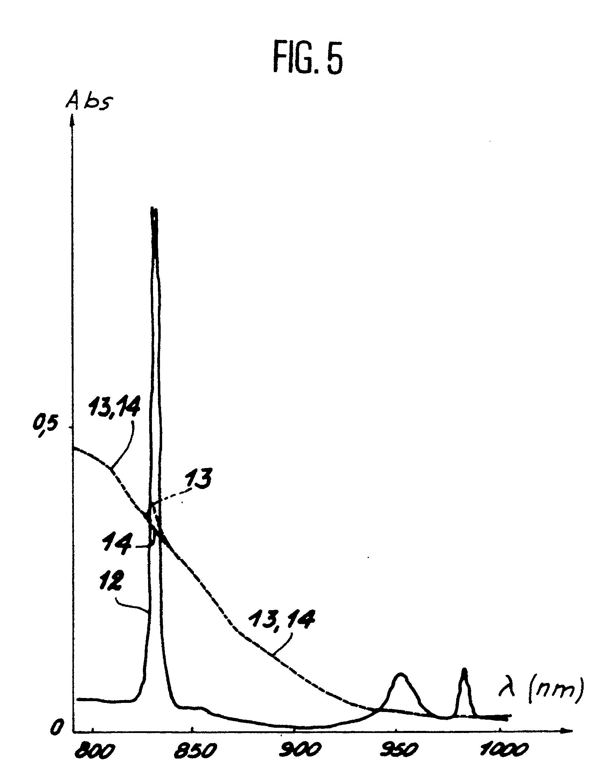

- la figure 5 illustre les spectres d'absorption d'une solution aqueuse contenant 1 $mol.l^{-1}$ d'acide nitrique et $1,2g.l^{-1}$ de plutonium (VI),
  1°) - sans autres additifs,
  2°) - 10 min. après l'addition du réactif constitué par le couple vanadium (V)/vanadium (IV) avec un rapport vanadium (V)/vanadium (IV) de 0,5 et une concentration totale en vanadium de $4.10^{-2}$ $mol.l^{-1}$ et,
  3°) - 30 min. après l'addition de ce même réactif.

Sur la figure 1, on a représenté les spectres d'absorption, soit l'absorption en fonction de la longueur d'onde (en nm) de solutions aqueuses de sulfate de vanadyle contenant $1mol.l^{-1}$ d'acide nitrique et différentes concentrations en sulfate de vanadyle. Sur cette figure, la courbe (1) se réfère à une solution contenant $4.10^{-3}$ $mol.l^{-1}$ de sulfate de vanadyle, la courbe (2) se réfère à une solution contenant $10^{-2}$ $mol.l^{-1}$ de sulfate de vanadyle, et la courbe (3) se réfère à une solution contenant $3.10^{-2}$ $mol.l^{-1}$ de sulfate de vanadyle.

Ces courbes montrent que le sulfate de vanadyle présente un maximum d'absorption à une longueur d'onde de 765nm, et que son absorption à la longueur d'onde utilisée pour le dosage du neptunium (981nm) est faible. Elle augmente toutefois avec la concentration en sulfate de vanadyle, mais il est facile d'en tenir compte lors de l'étalonnage du spectrophotomètre. Ainsi, ces résultats montrent que l'on peut utiliser un réactif à base de vanadium pour le dosage du neptunium par spectrophotométrie d'absorption.

Dans les exemples suivants qui illustrent le procédé de l'invention, on utilise des réactifs à base de vanadium pour stabiliser le neptunium au degré d'oxydation (V). Ces réactifs sont constitués par une solution de sulfate de vanadyle dont une partie du vanadium a été oxydée en vanadium (V) par addition d'ions cérium (IV).

## EXEMPLE 1

Cet exemple illustre le dosage de neptunium présent dans une solution aqueuse contenant $1mol.l^{-1}$ d'acide nitrique et $1,42.10^{-3}$ $mol.l^{-1}$ de neptunium présent dans la solution sous forme de neptunium (V) et de neptunium (VI).

Pour ce dosage, on ajoute à la solution à doser une solution de sulfate de vanadyle partiellement oxydé par des ions cérium (IV) dans laquelle le rapport vanadium (V)/vanadium (IV) est égal à 0,5, en quantité telle que la concentration totale en vanadium de l'échantillon de solution à doser soit de $2.10^{-2}$ $mol.l^{-1}$. On détermine ensuite le spectre d'absorption dans le domaine des longueurs d'onde allant de 750 à 1000nm. Les résultats obtenus sont donnés sur la figure 2 où la courbe (4) représente le spectre d'absorption obtenu dans ces conditions.

Sur cette figure, la courbe (5) illustre le spectre d'absorption de la même solution de neptunium avant addition du couple vanadium (V)-vanadium(IV).

On voit ainsi que le spectre d'absorption présente dans les deux cas un pic à 981nm mais que dans le cas de l'addition du couple vanadium (V)/vanadium (IV), la hauteur de ce pic est plus importante, ce qui montre bien que le neptunium a été stabilisé au degré d'oxydation (V).

EXEMPLE 2

Cet exemple illustre le dosage du neptunium présent dans une solution aqueuse contenant $1 mol.l^{-1}$ d'acide nitrique et $2.10^{-3}$ $mol.l^{-1}$ de neptunium (IV).

On ajoute tout d'abord à la solution à doser une solution de sulfate de vanadyle partiellement oxydé par des ions cérium (IV), dans laquelle le rapport vanadium (V)/vanadium (IV) est de 0,35, en quantité telle que la teneur totale en vanadium de la solution à doser soit de $8.10^{-2}$ $mol.l^{-1}$.

On détermine alors le spectre d'absorption dans le domaine de longueurs d'onde allant de 900 à 1100nm. Les résultats obtenus sont donnés sur la figure 3 où la courbe (6) représente ce spectre d'absorption.

La courbe (7) donnée sur cette figure à titre comparatif illustre le spectre d'absorption de la solution avant addition du réactif à base de vanadium, et la courbe (8) illustre les résultats obtenus lorsqu'on utilise le procédé de l'art antérieur pour oxyder le neptunium (IV) en neptunium (V), soit l'addition d'ions cérium (IV), d'hydroxylamine et de nitrite de sodium.

Comme précédemment, on remarque que le réactif à base de vanadium de l'invention permet d'oxyder quantitativement le neptunium et d'obtenir un pic d'absorption équivalent à celui que l'on obtient lorsqu'on utilise le procédé de l'art antérieur pour oxyder le neptunium.

EXEMPLES 3 à 7

Dans ces exemples, on étudie l'influence du rapport vanadium (V)/vanadium (IV) sur la mesure de la concentration en neptunium.

La solution de neptunium utilisée dans tous les exemples est une solution aqueuse contenant 1 $mol.l^{-1}$ d'acide nitrique et $1,42.10^{-3}$ $mol.l^{-1}$ de neptunium (VI). On ajoute à cette solution le réactif de l'invention à base de sulfate de vanadyle partiellement oxydé en utilisant des rapports vanadium (V)/vanadium (IV) différents et on détermine dans chaque cas la hauteur du pic d'absorption à 981nm. Les résultats obtenus sont donnés dans le tableau joint.

Dans ce tableau, on a également donné à titre comparatif le résultat obtenu (exemple 7) lorsque l'on traite la solution selon le procédé de l'art antérieur en lui ajoutant $4.10^{-3}$ $mol.l^{-1}$ de cérium (IV) et $4.10^{-2}$ $mol.l^{-1}$ d'hydrazine. Dans ces conditions, la hauteur du pic d'absorption est de 145,5mm. Dans le cas de l'exemple 5 où le rapport vanadium (V)/vanadium (IV) est de 0,43, on obtient pratiquement la même hauteur du pic d'absorption. Aussi, pour apprécier la sensibilité du dosage de l'invention, on a reporté également dans le tableau, le rapport $h_v$ /$h_c$ dans lequel $h_v$ représente la hauteur du pic obtenu par le procédé de l'invention et $h_c$ représente la hauteur du pic obtenu selon l'art antérieur (exemple 7).

EXEMPLES 8 à 11

Dans ces exemples, on utilise le même mode opératoire que dans les exemples 3 à 6, mais en partant d'une solution contenant $2.10^{-3}$ $mol.l^{-1}$ de neptunium (IV) et en utilisant des rapports différents vanadium (V)/vanadium (IV) et une concentration totale en vanadium de $8.10^{-2}$ $mol.l^{-1}$.

A titre comparatif, on effectue aussi le dosage de la solution en utilisant le procédé de l'art antérieur pour oxyder le neptunium en neptunium (V) (exemple 11).

Les résultats obtenus sont donnés également dans le tableau joint. Au vu de ces résultats, on constate que la meilleure sensibilité est obtenue comme précédemment lorsque le rapport vanadium (V)/vanadium (IV) est voisin de 0,5.

La figure 4 illustre également les résultats obtenus dans les exemples 3 à 6 et 8 à 10 en représentant la valeur du rapport $h_v$ /$h_c$ en fonction du rapport vanadium (V)/vanadium (IV). Sur cette figure, la courbe 9 se rapporte aux exemples 3 à 6, la courbe 10 aux exemples 8 à 11 et la courbe 11 à des dosages effectués sur une solution contenant $1,42.10^{-3} mol.l^{-1}$de neptunium en utilisant une concentration totale en vanadium de $2.10^{-2}$ $mol.l^{-1}$.

Au vu de ces courbes, on constate que les meilleurs résultats sont obtenus pour des valeurs du rapport vanadium (V)/vanadium (IV) d'environ 0,5 et que la sensibilié du dosage diminue lorsque la concentration totale en vanadium de la solution augmente.

On pourrait expliquer ce dernier phénomène par l'augmentation de la force ionique du milieu due à

l'addition de vanadium ou par l'introduction d'anions constitués ici par des anions $SO_4^{2-}$, susceptibles de complexer l'ion $NpO_2^+$ et donc de modifier la valeur du coefficient d'extinction molaire de la solution.

En fait, l'introduction d'ions sulfate ne modifie pas la valeur de la hauteur du pic. En revanche, comme on l'a vu précédemment, le vanadium (IV) est susceptible de former des complexes avec le neptunium (V) et ceci a un effet sur la hauteur du pic d'absorption.

La constante de formation K du complexe Np(V)-V(IV) a été estimée à 0,69±0,12 à force ionique 6,1, en milieu perchlorate par C. MADIC et coll. Radiochimica Acta, 1983, 34, 195.

Cette constante de formation K est représentée par la formule :

$$K = \frac{C}{[Np(V)]_1 [V(IV)]}$$

dans laquelle C représente la concentration du complexe de neptunium (V) et de vanadium (IV), $[Np(V)]_1$ représente la concentration de neptunium (V) non complexé et[V(IV)] représente la concentration en vanadium (IV).

On a ainsi :

$$K \quad V(IV) = \frac{C}{[Np(V)]_1} \simeq \frac{C}{[Np(V)]_T}$$

avec $[Np(V)]_T$ représentant la concentration en neptunium total de la solution de départ.
Or, $[Np(V)]_T = C + [Np(V)]_1$,
soit :

$$\frac{C}{[Np(V)]_T} + \frac{[Np(V)]_1}{[Np(V)]_T} = 1$$

Aussi, en remplaçant $C/[NP(V)]_T$ par K[V(IV)] et $[Np(V)]_1/ [Np(V)]_T$ par $h_v/h_c$, on obtient l'expression :

$K[V(IV)] + h_v/h_c = 1$ (I)

En utilisant les valeurs de $h_v/h_C$ déterminées sur la figure 4 pour le rapport V(V)/V(IV) égal à 0,5 et la valeur de K, on peut calculer l'expression (I). Les résultats obtenus pour différentes concentrations en vanadium (IV) sont données ci-dessous.

| $V_T$ ($mol.l^{-1}$) | [V(IV)] ($mol.l^{-1}$) | $h_v/h_c$ | Expression (I) |
|---|---|---|---|
| $2.10^{-2}$ | $1,33.10^{-2}$ | 0,998 | 1,007 |
| $4.10^{-2}$ | $2,67.10^{-2}$ | 0,989 | 1,007 |
| $8.10^{-2}$ | $5,33.10^{-2}$ | 0,972 | 1,009 |

Les résultats obtenus sont en bon accord avec la valeur attendue. Ainsi, la formation du complexe de neptunium (V) et de vanadium (IV) explique les variations du rapport $h_v/h_c$ en fonction de la concentration en vanadium (IV) de la solution.

EXEMPLE 12

Dans cet exemple, on dose le neptunium présent dans une solution aqueuse contenant une mole d'acide nitrique, $1,42.10^{-3}mol.l^{-1}$ de neptunium et $1,2g.l^{-1}$ de plutonium (VI).

Comme on l'a vu précédemment, le plutonium (VI) est un élément gênant pour le dosage, car il présente un pic d'absorption à 980nm dans l'état d'oxydation +VI.

Cependant, l'addition du réactif à base de vanadium de l'invention permet de stabiliser le plutonium au degré d'oxydation (IV) et d'éliminer ainsi l'interférence du plutonium (VI) dans le dosage du neptunium (V).

En se reportant à la figure 5 qui illustre les spectres d'absorption de solutions aqueuses contenant $1mol.l^{-1}$ d'acide nitrique et $1,2g.l^{-1}$ de plutonium (VI),

1°) - sans addition d'autre réactif (courbe 12),

2°) - 10 min. après l'addition d'une solution aqueuse de sulfate de vanadyle dans laquelle le rapport V-(V)/V(IV) est égal à 0,5 et la concentration totale en vanadium de $4.10^{-2}$ $mol.l^{-1}$ (courbe 13), et

3°) - 30 min. après l'addition de ce même réactif (courbe 14), on peut voir que l'addition du système vanadium (V)/vanadium (IV) permet d'éliminer le pic d'absorption du plutonium à 981nm.

Ainsi, on voit qu'au bout de 10 min. le pic d'absorption à 980nm a disparu et que le pic d'absorption à 830nm est beaucoup plus faible. 30 min. après l'addition du réactif les pics d'absorption à 830, 950 et 980nm ont totalement disparu, ce qui montre l'efficacité du réactif de l'invention pour stabiliser le plutonium au degré d'oxydation (IV).

Pour doser le neptunium en présence de plutonium (VI), il faut donc utiliser des quantités de vanadium (IV) suffisantes pour réduire non seulement le neptunium (VI) mais aussi le plutonium (VI).

Aussi, si l'on veut réaliser le dosage en utilisant la même valeur optimale de 0,5 pour le rapport vanadium (V)/vanadium (IV), il est nécessaire d'augmenter la concentration totale en vanadium pour réduire simultanément le neptunium et le plutonium.

Dans ce cas, pour ne pas fausser les résultats du dosage, il est nécessaire d'effectuer l'étalonnage du spectrophotomètre en utilisant des concentrations en vanadium plus importantes afin de pouvoir négliger ensuite la variation de la concentration de vanadium (IV) due à la présence du plutonium (VI).

On peut aussi réaliser le dosage en ajustant le rapport vanadium (V)/vanadium (IV) en fonction de la teneur estimée en plutonium (VI) pour qu'après réduction du plutonium (VI), la quantité résiduelle de vanadium (IV) soit telle que le rapport vanadium (V)/vanadium (IV) résiduel ait une valeur équivalente à celle utilisée pour l'étalonnage du spectrophotomètre.

Dans l'exemple donné ici, on utilise cette seconde méthode, soit un rapport vanadium (V)/vanadium (IV) de 0,3 et une concentration totale en vanadium de l'échantillon de $8.10^{-2}$ $mol.l^{-1}$.

TABLEAU

| Solution initiale M Ex. / Ajouts | Ce (IV) mol.$l^{-1}$ | $[N_2H_4]$ mol.$l^{-1}$ | $[V(V)]/[V(IV)]$ mol.$l^{-1}$ | $\frac{V(V)}{V(IV)}$ | Hauteur du pic à 981nm (mm) | $h_v/h_c$ |
|---|---|---|---|---|---|---|
| 3 | | | $4.10^{-3}/3,6.10^{-2}$ $(4.10^{-2})$ | 0,11 | 141 | 0,969 |
| 4 | | | $8.10^{-3}/3,2.10^{-2}$ | 0,25 | 143,5 | 0,985 |
| 5 | | | $1,2.10^{-2}/2,8.10^{-2}$ | 0,43 | 144 | 0,99 |
| 6 | | | $2.10^{-2}/2.10^{-2}$ | 1 | 142,5 | 0,983 |
| Comparatif 7 | $4.10^{-3}$ | $4.10^{-2}$ | | | 145,5 | |
| 8 | | | $1,6.10^{-2}/6,4.10^{-2}$ | 0,25 | 203 | 0,966 |
| 9 | | | $2.10^{-2}/6.10^{-2}$ | 0,33 | 204,5 | 0,974 |
| 10 | | | $2,4.10^{-2}/5,6.10^{-2}$ | 0,43 | 203,5 | 0,97 |
| Comparatif 11 | $4.10^{-3}$ | $4.10^{-2}$ | | | 210 | |

**Revendications**

1. Procédé de dosage du neptunium présent dans une solution aqueuse, consistant à traiter ladite solution pour stabiliser le neptunium au degré d'oxydation (V) et à doser ensuite le neptunium (V) de la solution par spectrophotométrie d'absorption à une longueur d'onde correspondant à un pic d'absorption du neptunium (V), caractérisé en ce que l'on réalise le traitement de stabilisation du neptunium au degré

d'oxydation (V) en ajoutant à ladite solution des quantités suffisantes d'un réactif sous deux degrés d'oxydation afin de réduire tout le neptunium (VI) présent dans la solution en neptunium (V) et oxyder tout le neptunium (IV) présent dans la solution en neptunium (V), ledit réactif étant choisi de façon telle qu'il ne présente pas d'absorption significative à la longueur d'onde utilisée pour le dosage du neptunium (V) par spectrophotométrie d'absorption.

**2.** Procédé selon la revendication 1, caractérisé en ce que la longueur d'onde est de 981nm.

**3.** Procédé selon l'une quelconque des revendications 1 et 2, caractérisé en ce que le réactif est constitué par du vanadium au degré d'oxydation (V) et au degré d'oxydation (IV).

**4.** Procédé selon la revendication 3, caractérisé en ce que le réactif est constitué par une solution de sulfate de vanadyle à laquelle on a ajouté du cérium (IV) pour oxyder partiellement le vanadium (IV) et obtenir ainsi une solution de vanadium (V) et de vanadium (IV).

**5.** Procédé selon l'une quelconque des revendications 3 et 4, caractérisé en ce que, la solution aqueuse contenant au plus $1 g.l^{-1}$ de neptunium, les quantités de vanadium (V) et de vanadium (IV) ajoutées sont telles que la concentration totale en vanadium de la solution soit de $10^{-2}$ à $1,5.10^{-1} mol.l^{-1}$.

**6.** Procédé selon l'une quelconque des revendications 3 à 5, caractérisé en ce que les quantités de vanadium (V) et de vanadium (IV) ajoutées sont telles que le rapport de la quantité de vanadium (V) à la quantité de vanadium (IV) ait une valeur allant de 0,2 à 1.

**7.** Procédé selon la revendication 6, caractérisé en ce que le rapport de la quantité de vanadium (V) à la quantité de vanadium (IV) a une valeur allant de 0,4 à 0,6.

**8.** Procédé selon l'une quelconque des revendications 1 à 7, caractérisé en ce que la solution aqueuse à doser contient également du plutonium (VI) et en ce que l'on ajoute à la solution une quantité de vanadium (IV) suffisante pour réduire d'une part tout le plutonium (VI) en plutonium (IV) et d'autre part, tout le neptunium (VI) en neptunium (V).

## Claims

**1.** Method of determining the neptunium present in an aqueous solution, consisting in treating the said solution to stabilise the neptunium in the oxidation state V and then determining the neptunium(V) in the solution by absorption spectrophotometry at a wavelength corresponding to an absorption peak for neptunium (V), characterised in that the treatment for stabilising the neptunium in the oxidation state V is carried out by adding to the said solution sufficient quantities of a reactant in two oxidation states in order to reduce all the neptunium(VI) present in the solution to neptunium(V) and to oxidise all the neptunium(IV) present in the solution to neptunium(V), the said reactant being chosen so that it does not exhibit any significant absorption at the wavelength employed for determining neptunium(V) by absorption spectrophotometry.

**2.** Method according to Claim 1, characterised in that the wavelength is 981 nm.

**3.** Method according to either of Claims 1 and 2, characterised in that the reactant consists of vanadium in the oxidation state V and in the oxidation state IV.

**4.** Method according to Claim 3, characterised in that the reactant consists of a solution of vanadyl sulphate to which cerium(IV) has been added to partially oxidise the vanadium(IV) and thus to obtain a solution of vanadium (V) and vanadium(IV).

**5.** Method according to either of Claims 3 and 4, characterised in that, when the aqueous solution contains not more than $1 g 1^{-1}$ of neptunium, the quantities of vanadium(V) and vanadium(IV) which are added are such that the total vanadium concentration in the solution is from $10^{-2}$ to $1.5x10^{-1} mol 1^{-1}$.

**6.** Method according to any one of Claims 3 to 5, characterised in that the quantities of vanadium(V) and vanadium(IV) which are added are such that the ratio of the quantity of vanadium(V) to the quantity of

vanadium(IV) has a value ranging from 0.2 to 1.

7. Method according to Claim 6, characterised in that the ratio of the quantity of vanadium(V) to the quantity of vanadium(IV) has a value ranging from 0.4 to 0.6.

8. Method according to any one of Claims 1 to 7, characterised in that the aqueous solution to be determined also contains plutonium(VI) and in that a sufficient quantity of vanadium(IV) is added to the solution to reduce, on the one hand, all the plutonium(VI) to plutonium(IV) and, on the other hand, all the neptunium(VI) to neptunium (V).

## Patentansprüche

1. Verfahren zur Bestimmung (Dosierung) des in einer wäßrigen Lösung vorhandenen Neptuniums, das darin besteht, daß man diese Lösung behandelt, um das Neptunium im Oxidationsgrad (V) zu stabilisieren und anschließend das Neptunium(V)der Lösung durch Absorptionsspektrophotometrie bei einer Wellenlänge, die einem Absorptionspeak des Neptuniums(V) entspricht, bestimmt, dadurch gekennzeichnet, daß man die Behandlung zur Stabilisierung des Neptuniums im Oxidationsgrad (V) durchführt, indem man zu dieser Lösung ausreichende Mengen eines Reagens in zwei Oxidationsgraden zugibt, um das in der Lösung vorhandene gesamte Neptunium(VI) zu Neptunium(V) zu reduzieren und das in der Lösung vorhandene gesamte Neptunium(IV) zu Neptunium(V) zu oxidieren, wobei das Reagens in der Weise ausgewählt wird, daß es keine signifikante Absorption bei der für die Bestimmung des Neptuniums(V) durch Absorptionsspektrophotometrie angewendeten Wellenlänge aufweist.

2. Verfahren nach Anspruch 1, dadurch gekennzeichnet, daß die Wellenlänge 981 nm beträgt.

3. Verfahren nach einem der Ansprüche 1 und 2, dadurch gekennzeichnet, daß das Reagens aus Vanadium vom Oxidationsgrad (V) und vom Oxidationsgrad (IV) besteht.

4. Verfahren nach Anspruch 3, dadurch gekennzeichnet, daß das Reagens aus einer Vanadylsulfatlösung besteht, der Cer(IV) zugesetzt worden ist, um das Vanadium(IV) partiell zu oxidieren und auf diese Weise eine Lösung von Vanadium(V) und von Vanadium(IV) zu erhalten.

5. Verfahren nach einem der Ansprüche 3 und 4, dadurch gekennzeichnet, daß in der wäßrigen Lösung, die höchstens 1 g/l Neptunium enthält, die zugegebenen Mengen an Vanadium(V) und an Vanadium(IV) so sind, daß die Gesamtkonzentration der Lösung an Vanadium $10^{-2}$ bis $1,5 \times 10^{-1}$ Mol/l beträgt.

6. Verfahren nach einem der Ansprüche 3 bis 5, dadurch gekennzeichnet, daß die zugegebenen Mengen an Vanadium(V) und an Vanadium(IV) so sind, daß das Verhältnis zwischen der Menge an Vanadium(V) und der Menge an Vanadium(IV) einen Wert von 0,2 bis 1 hat.

7. Verfahren nach Anspruch 6, dadurch gekennzeichnet, daß das Verhältnis zwischen der Menge an Vanadium(V) und der Menge an Vanadium(IV) einen Wert von 0,4 bis 0,6 hat.

8. Verfahren nach einem der Ansprüche 1 bis 7, dadurch gekennzeichnet, daß die zu bestimmende (zu dosierende) wäßrige Lösung auch Plutonium(VI) enthält und daß man der Lösung eine Menge an Vanadium(IV) zusetzt, die ausreicht, um einerseits das gesamte Plutonium(VI) zu Plutonium(IV) und andererseits das gesamte Neptunium(VI) zu Neptunium(V) zu reduzieren.

FIG. 1

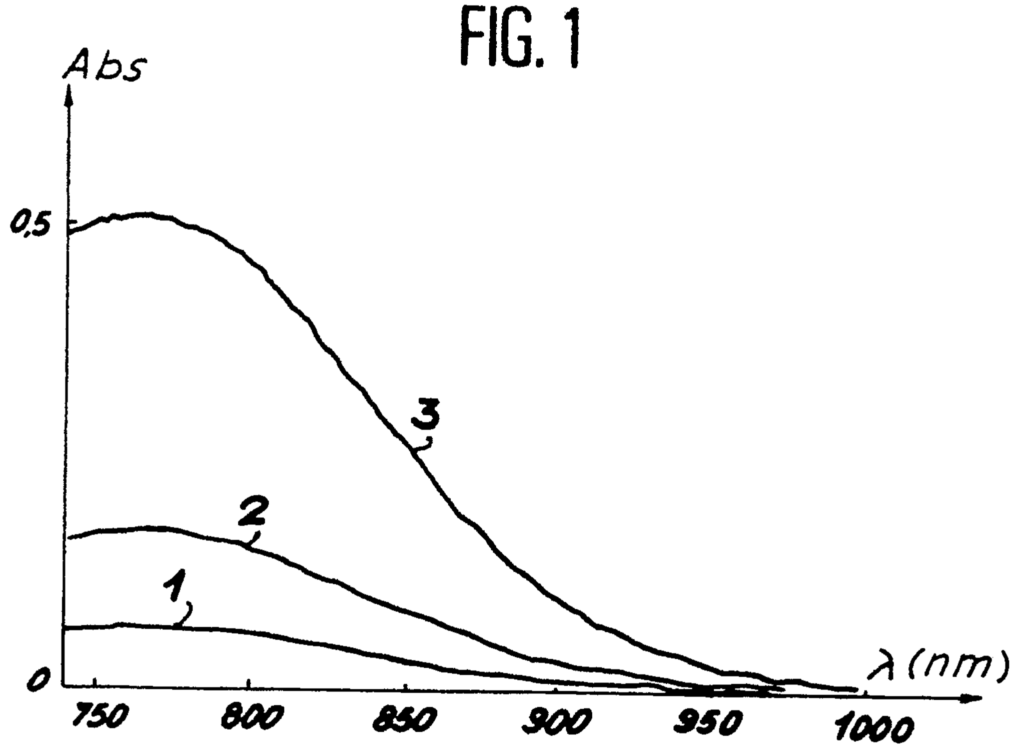
Abs
0,5
0
3
2
1
λ (nm)
750
800
850
900
950
1000

FIG. 2

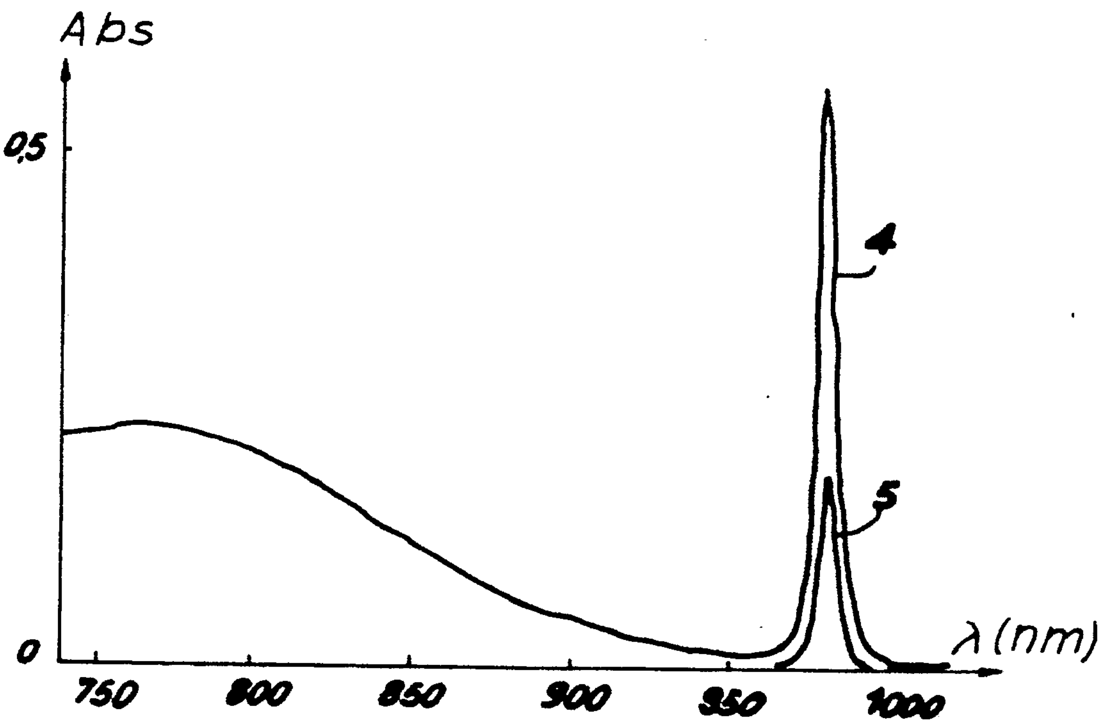
Abs
0,5
0
4
5
λ (nm)
750
800
850
900
950
1000

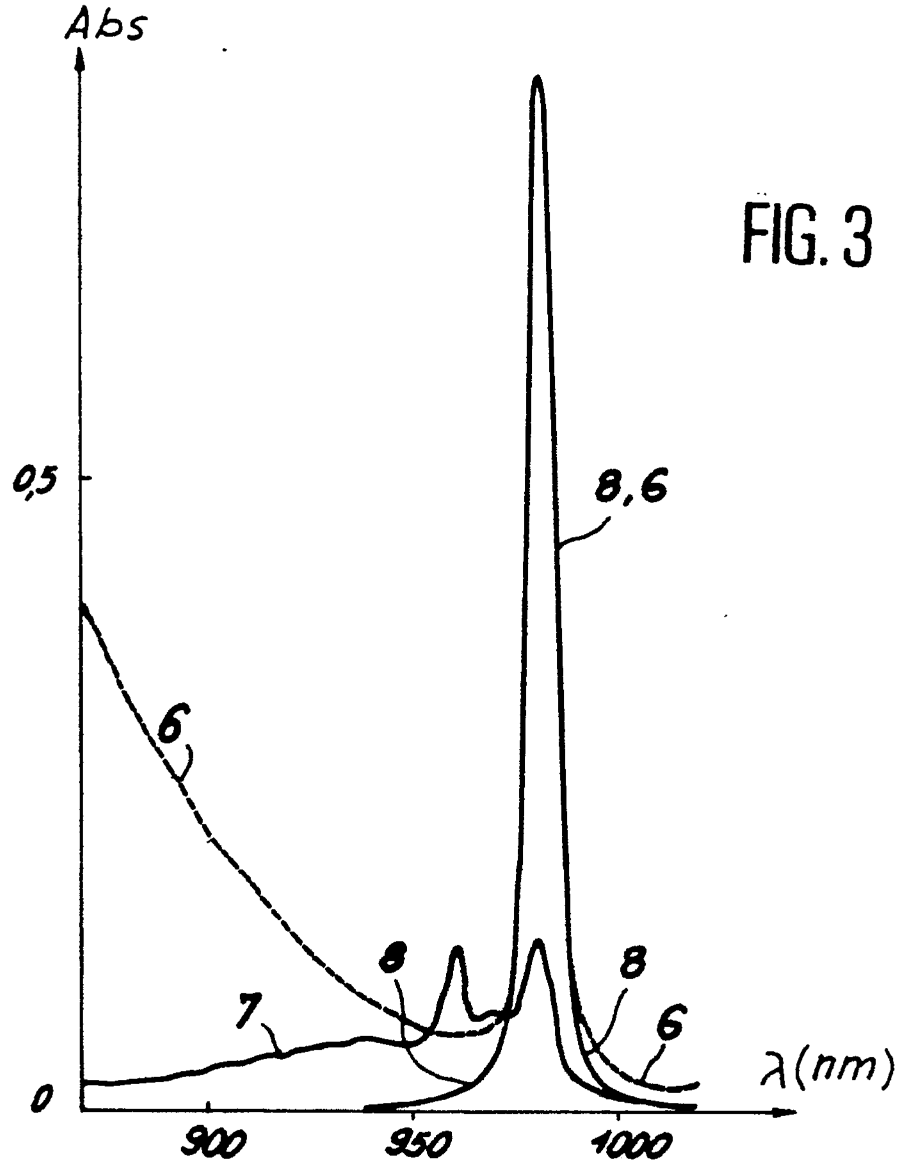
Abs
0,5
8,6
6
8
7
8
6
0
λ(nm)
900
950
1000

FIG. 3

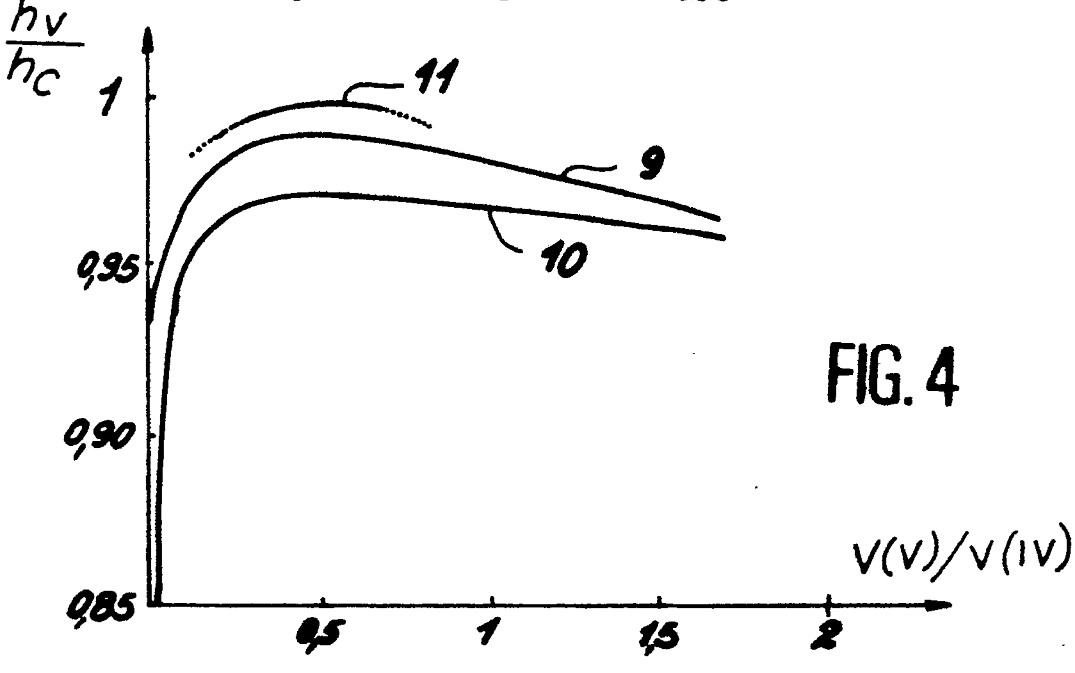
hv/hc
1
11
9
10
0,95
0,90
0,85
V(V)/V(IV)
0,5
1
1,5
2

FIG. 4

FIG. 5